# EUROPÄISCHE PATENTSCHRIFT

(11) **EP 2 117 888 B1**
(45) Veröffentlichungstag und Bekanntmachung des Hinweises auf die Patenterteilung: **17.08.2011**
(21) Anmeldenummer: 07822066.2
(22) Anmeldetag: 31.10.2007
(51) Int. Cl.: B60S 1/08

(54) **VORRICHTUNG UND VERFAHREN ZUR ANSTEUERUNG EINER ANTRIEBSEINHEIT EINER WISCHANLAGE**
DEVICE AND METHOD FOR ACTUATING A DRIVE UNIT OF A WIPER SYSTEM
DISPOSITIF ET PROCÉDÉ DE COMMANDE D'UNE UNITÉ D'ENTRAÎNEMENT D'UN SYSTÈME ESSUIE-GLACE

(30) Priorität: 28.12.2006 DE 102006061679
(43) Veröffentlichungstag der Anmeldung: 18.11.2009
(73) Patentinhaber: Robert Bosch GmbH, 70442 Stuttgart (DE)
(72) Erfinder: BRAUN, Peter, 77830 Buehlertal (DE); WEGNER, Norbert, 77815 Buehl (DE); RETSCH, Harald, 77855 Achern (DE)
(86) Internationale Anmeldenummer: PCT/EP2007/061715
(87) Internationale Veröffentlichungsnummer: WO 2008/080666

(56) Entgegenhaltungen:
- WO-A-96/37391
- DE-A1- 4 033 332
- DE-A1- 4 330 112

## Beschreibung

Die Erfindung betrifft eine Vorrichtung zur Ansteuerung einer Antriebseinheit für eine Wischanlage, insbesondere für eine Scheibenwischeranlage eines Kraftfahrzeugs. Die Erfindung betrifft weiterhin ein Verfahren zur Ansteuerung einer solchen Antriebseinheit.

Wischanlagen für z. B. Windschutzscheiben eines Kraftfahrzeugs weisen einen oder mehrere Wischarme auf, die mit Wischerblättern versehen sind, um Feuchtigkeit in Form von Beschlag o.ä. bzw. Wassertropfen von der Windschutzscheibe zu entfernen. Je nachdem, ob und welcher Beschlag auf der Windschutzscheibe vorhanden ist, sind für die Bewegung der Wischerarme aufgrund der Reibung zwischen den Wischerblättern und Oberfläche der Windschutzscheibe unterschiedliche Drehmomente erforderlich. Die Drehmomente müssen beim Antrieb der Wischarme von einer entsprechenden Antriebseinheit für die Wischanlage bereitgestellt werden. Insbesondere beim Betreiben der Wischerarme auf einer trockenen Scheibe ist die Reibung zwischen dem Wischerblatt und der Oberfläche der Windschutzscheibe deutlich größer als bei einer benetzten Oberfläche, so dass ein hohes Drehmoment erforderlich ist, um den Wischerarm mit einer vom Fahrer vorgegebenen Geschwindigkeit zu bewegen.

Das höhere Drehmoment, das von der Antriebseinheit bereitgestellt werden muss, verursacht dort eine entsprechend erhöhte Stromaufnahme, wodurch diese erwärmt wird. Um eine Beschädigung der Antriebseinheit durch eine Überhitzung aufgrund einer hohen Stromaufnahme zu vermeiden, ist eine solche Antriebseinheit häufig durch einem Thermoschalter geschützt. Der Thermoschalter schaltet die Antriebseinheit bei Erreichen bzw. Überschreiten einer vorgegebenen Schwellentemperatur ab, um die Antriebseinheit der Wischeranlage vor einer Überhitzung und eine dadurch auftretende Zerstörung zu bewahren. Die Wischfunktion ist dabei erst wieder nach dem Abkühlen der Antriebseinheit unter die Schwellentemperatur verfügbar.

Anstelle des Thermoschalters kann bei Wischermotoren, wie z. B. bei Reversier-Motoren, die aktuelle Temperatur des Motors bzw. dessen Belastung anhand eines Rechenmodells ermittelt und eine Abschaltung der entsprechenden Antriebseinheit durchgeführt werden, wenn die so ermittelte Temperatur bzw. Belastung eine entsprechende Schwelle übersteigt. Dies kann jedoch dazu führen, dass dem Fahrer eine Wischfunktion für eine gewisse Zeitdauer nicht zur Verfügung steht, bis die Antriebseinheit sich entsprechend abgekühlt hat. Unter Umständen kann bei Regen während dieser Zeit eine ausreichende Sicht durch die Windschutzscheibe nicht gewährleistet werden, wodurch, wenn ein solches Abschalten während einer Fahrt erfolgt, eine Gefährdung des Fahrers resultieren kann.

Die Druckschrift DE 43 30 112 A1 offenbart eine Vorrichtung zum Ansteuern einer Wischanlage mit einem Scheibenwischermotor, wobei der Scheibenwischermotor eine niedrigere als die aktuell eingestellte Scheibenwischergeschwindigkeitsstufe einstellt, wenn der Wert des Drehmoments einen vorgegebenen Schwellenwert übersteigt.

Die Druckschrift WO 96/37 391 betrifft ein Wischersystem, bei dem die Geschwindigkeit des Wischarms abhängig von dem Motorstrom des Wischermotors eingestellt wird.

Es ist Aufgabe der vorliegenden Erfindung, eine Vorrichtung zum Ansteuern einer Antriebseinheit für eine Wischanlage zur Verfügung zu stellen, die einen sicheren Schutz der Antriebseinheit vor Überhitzung und eine bessere Verfügbarkeit der Wischanlage zur Verfügung stellt. Es ist weiterhin Aufgabe der vorliegenden Erfindung, ein Verfahren zur Ansteuerung einer Antriebseinheit einer Wischanlage zur Verfügung zu stellen.

Diese Aufgaben werden durch die Ansteuervorrichtung zum Ansteuern einer Antriebseinheit für eine Wischanlage gemäß Anspruch 1 sowie dem Wischsystem und dem Verfahren zum Ansteuern einer Antriebseinheit für eine Wischanlage gemäß Anspruch 8 gelöst.

Weitere vorteilhafte Ausgestaltungen der Erfindung sind in den abhängigen Ansprüchen angegeben.

Gemäß einem Aspekt ist eine Vorrichtung zum Ansteuern einer Wischanlage vorgesehen. Die Vorrichtung umfasst eine Antriebseinheit zum Antreiben von mindestens einem Wischarm und eine Steuereinheit. Die Steuereinheit ist ausgebildet, um eine Wischhäufigkeit des Wischerarms abhängig von einer Lastgröße einzustellen, die von einem durch die Antriebseinheit bei einem Wischen aufzubringendem Drehmoment abhängt.

Die erfindungsgemäße Vorrichtung ermöglicht es, anhand einer Lastgröße zu erkennens, wenn Voraussetzungen für eine Temperaturerhöhung in der Antriebseinheit der Wischanlage vorliegen. Abhängig von der Lastgröße, die beispielsweise anhand von Ansteuerparameter der Antriebseinheit ermittelt werden kann, wird die Wischfrequenz, die Wischhäufigkeit bzw. die Wischgeschwindigkeit entsprechend angepasst, um eine Überhitzung der Antriebseinheit bzw. eine Unterbrechung des Betriebs der Antriebseinheit aufgrund einer abhängig von einer Temperaturüberschreitung durchgeführten Notabschaltung zu verhindern. Da eine Erhöhung der Last in der Antriebseinheit häufig aufgrund einer hohen Reibung zwischen einer trockenen Scheibenoberfläche und dem Wischblatt der Wischeranlage verursacht wird, treten durch die Reduzierung der Wischhäufigkeit anstelle der Abschaltung des Wischens keine Beeinträchtigungen der Sicht für den Fahrer auf. Die Anpassung der Wischhäufigkeit anhand der Lastgröße hat den Vorteil, dass bereits im Vorfeld eine übermäßige Temperaturerhöhung in der Antriebseinheit vermieden werden kann.

Weiterhin kann eine Treibereinheit zum Ansteuern der Antriebseinheit und zum Einstellen einer Wischhäufigkeit gemäß einer Stellgröße vorgesehen sein.

Gemäß einer weiteren Ausführungsform ist ein Lastgrößendetektor vorgesehen, um abhängig von dem durch die Antriebseinheit aufzubringendem Drehmoment die Lastgröße bereitzustellen. Insbesondere ist der Lastgrößendetektor vorgesehen, um die Lastgröße abhängig von mindestens eine der in der Antriebseinheit vorliegenden Größen Antriebsspannung, Antriebsstrom und Drehzahl zu bestimmen.

Gattungsgemäβ reduziert die Steuereinheit die Wischhäufigkeit des Wischarms von einer ersten Wischhäufigkeit auf eine zweite reduzierte Wischhäufigkeit, wenn die Lastgröße eine Lastschwelle übersteigt.

Weiterhin kann die Steuereinheit die Wischhäufigkeit des Wischarms nach dem Überschreiten der Lastschwelle durch die Lastgröße nach einer vorgegebenen Zeitdauer oder nach einer vorgegebenen Anzahl von Wischzyklen reduzieren.

Erfindungsgemäβ ist vorgesehen, dass die Steuereinheit das Reduzieren der Wischhäufigkeit des Wischarms auf die zweite Wischhäufigkeit gemäß einer kontinuierlichen Abnahme der Wischhäufigkeit durchführt.

Die Steuereinheit kann weiterhin die erste Wischhäufigkeit des Wischarms nach dem Unterschreiten einer zweiten Lastschwelle unmittelbar oder gemäß einem vorgegebenen kontinuierlichen Anstieg einstellen.

Vorzugsweise ist ein manuell bedienbarer Schalter vorgesehen, um die Wischhäufigkeit unabhängig von der eingestellten Wischhäufigkeit auf eine vorgegebene Wischhäufigkeit einzustellen.

Gemäß einem weiteren Aspekt ist ein Verfahren zum Ansteuern einer Wischanlage gemäß Anspruch 8 vorgesehen.

Bevorzugte Ausführungsformen der Erfindung werden nachfolgend anhand der beigefügten Zeichnungen näher erläutert. Es zeigen:
Figur 1 ein Blockdiagramm eines Wischersystems gemäß einer Ausführungsform der Erfindung;
Figur 2 ein Zeitdiagramm zur Veranschaulichung der Funktionsweise der Ansteuervorrichtung anhand einer Darstellung von Lastmoment und eingestellter Wischfrequenz.

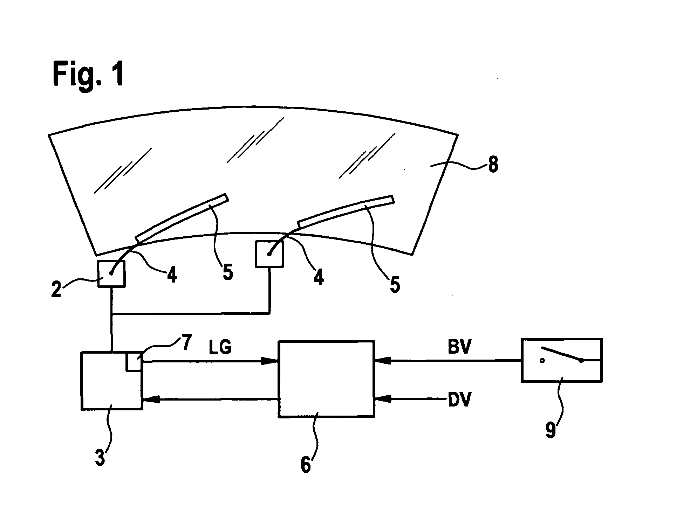

Figur 1 zeigt ein Wischsystem 1 gemäß einer Ausführungsform der vorliegenden Erfindung. Das Wischsystem 1 umfasst eine Wischanlage mit einer Antriebseinheit 2, die durch eine Treibereinheit 3 angesteuert wird. Die Antriebseinheit 2 kann einen Rundläufermotor oder einen Reversier-Wischermotor umfassen, die direkt oder z.B. über ein geeignetes Getriebe (nicht gezeigt) mit einem Wischarm 4 gekoppelt ist. An dem Wischarm 4 ist ein Wischerblatt 5 angebracht. Im Betrieb treibt die Antriebseinheit 2 den Wischarm so an, dass das Wischerblatt 5 über die Oberfläche einer Windschutzscheibe 8 eines Fahrzeugs streicht, um Beschlag, Regentropfen, Verschmutzungen und dergleichen auf der Oberfläche zu entfernen.

Die Treibereinheit 3 steuert die Antriebseinheit 2 z.B. mit Hilfe pulsweitenmodulierter Signale an, um die Wischeranlage in einem gewünschten Betriebszustand zu betreiben. Dazu wird der Treibereinheit 3 über eine Steuereinheit 6 eine Stellgröβe bereitgestellt. Die Stellgröße bestimmt beispielsweise eine oder mehrere Spannungen bzw. Spannungspulse, die der Antriebseinheit 2 von der Treibereinheit 3 bereitgestellt werden, um ein bestimmtes Antriebsmoment und/oder eine bestimmte Drehzahl zur Verfügung zu stellen. Alternativ kann die Stellgröße auch lediglich eine Wischhäufigkeit angeben, woraus die Treibereinheit 3 die entsprechenden Ansteuergrößen für die Antriebseinheit 2 ermittelt, um diese so anzutreiben, dass der Wischarm 4 mit der vorgegebenen Wischhäufigkeit betrieben wird.

Die Steuereinheit 6 ermittelt die Stellgröße gemäß dem gewählten Betriebszustand anhand einer in der Steuereinheit 6 empfangenen Benutzervorgabe BV oder sonstigen Detektorvorgaben DV, z.B. von einem Regensensor. Die Benutzervorgaben BV können einer Stellung eines Lenkstockschalters entsprechen, wodurch beispielsweise eine Wischhäufigkeit und ein Ein- und Ausschalten der Wischeranlage bestimmt wird.

Die Stellgröße bestimmt die Funktion der Wischanlage, d.h. bestimmt die Wischhäufigkeit. Die Wischhäufigkeit gibt allgemein die Anzahl der Wischzyklen pro Zeiteinheit an. Diese kann zum einen durch die Geschwindigkeit des Wischarms bei einem Wischzyklus, d.h. die Zeitdauer, die für einen Wischzyklus benötigt wird, und zum anderen durch ein Wischintervall bestimmt werden. Das Wischintervall gibt eine Unterbrechungszeit zwischen zwei Wischbewegungen (Wischzyklen) an, während der der Wischerarm in einer vorbestimmten Position, vorzugsweise einer unteren Umkehrlage verharrt. Ein solches Wischintervall kann beispielsweise dann vorgesehen werden, wenn zur Lastreduktion in der Antriebseinheit 2 die Geschwindigkeit des Wischarms 4 nicht weiter reduziert werden kann, ohne das ein Rattern des Wischerblatts 5 auf der Scheibenoberfläche auftritt.

Die Treibereinheit 3 weist zum Detektieren eines Lastmoments an der Antriebseinheit 2 einen Lastdetektor 7 auf, der eine Lastgröße LG an die Steuereinheit 6 zurückmeldet. Die Lastgröße entspricht einer Angabe über das momentan wirkende Lastmoment am Wischarm 4 der Wischeranlage. Die Lastgröße kann anhand physikalischer Daten, die in der Antriebseinheit 2 vorliegen, ermittelt werden. Solche physikalischen Daten können die Klemmenspannung des Motors der Antriebseinheit 2, der Antriebsstrom sowie die momentane Drehzahl des Motors der Antriebseinheit 2 enthalten. Im Allgemeinen beschreibt die Lastgröße, wie "schwer" oder "leicht" sich der Wischarm 4 über die Oberfläche der Windschutzscheibe 8 bewegt.

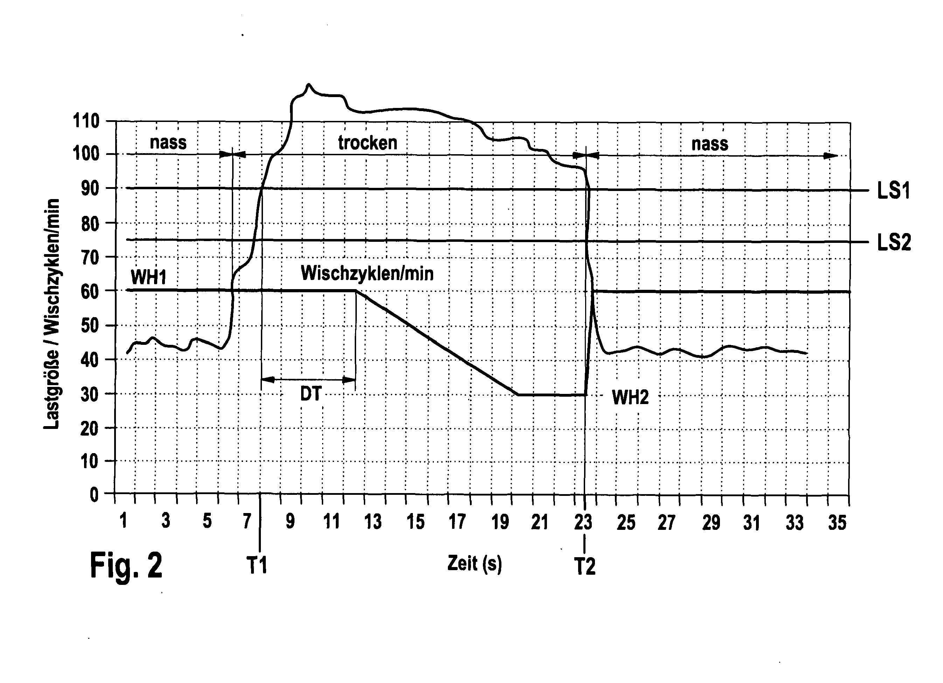

Wird in der Steuereinheit 6 aufgrund dieser Lastgröße LG erkannt, dass eine erhöhte Last vorliegt, so wird die Stellgröβe angepasst, um die die Wischhäufigkeit von einer ersten Wischhäufigkeit WH1 auf eine vorgegebene zweite kleinere Wischhäufigkeit WH2 zu reduzieren. Dies ist in Fig. 2 anhand des dargestellten Zeitdiagramms erkennbar, dass den Verlauf der Wischhäufigkeit (Wischzyklen/min) abhängig von der Lastgröße darstellt. Ein Erkennen, dass eine erhöhte Last vorliegt, zu einem Zeitpunkt T1 kann beispielsweise durch ein Vergleichen der aktuellen Lastgröße mit einer vorgegebenen ersten Lastschwelle LS1 durchgeführt werden. Eine erhöhte Last liegt vor, wenn die aktuelle Lastgröße LG die erste Lastschwelle LS1 übersteigt, was beispielsweise bei einem Abtrocknen der Windschutzscheibe 8 auftreten kann. Das eine Anpassung der Wischhäufigkeit vorgenommen werden soll, kann beispielsweise durch ein Umschaltsignal, das der Steuereinheit 6 bereitgestellt wird, angezeigt werden. Um auszuschlieβen, dass kurzzeitige Erhöhungen der Lastgröße nicht unmittelbar zu einem Reduzieren der Wischhäufigkeit führen, kann das Umschaltsignal erst erzeugt werden, wenn die Lastgröße die erste Lastschwelle für eine bestimmten Zeitdauer übersteigt. Auch kann ein Integrationsglied für die Differenz zwischen Lastgröße und erster Lastschwelle vorgesehen werden, das das Umschaltsignal erst bei Erreichen eines Integrationswertes erzeugt.

Die Steuereinheit 6 reduziert abhängig von dem Umschaltsignal mit Hilfe der an die Treibereinheit 3 übermittelten Stellgröβe die Wischhäufigkeit von der ersten Wischhäufigkeit WH1 auf eine vorgegebene oder von der ermittelten Lastgröße abhängige zweite Wischhäufigkeit WH2.

Das Reduzieren der Wischhäufigkeit kann unmittelbar als sprunghafte Änderung oder kontinuierlich mit einer vorgebbaren Abnahme der Wischhäufigkeit bis zur zweiten Wischhäufigkeit erfolgen, um eine Störung bzw. Ablenkung des Fahrers durch eine plötzlich auftretende Zustandsänderung in der Wischanlage zu vermeiden.

Es kann weiterhin vorgesehen sein, dass nach dem Überschreiten der ersten Lastschwelle LS1 zunächst noch eine in der Steuereinheit 6 einstellbare Anzahl von Wischzyklen mit der ursprünglichen Wischhäufigkeit, d. h. mit einer Wischhäufigkeit, bei der vor dem Auftreten der erhöhten Last gewischt wurde, bzw. für eine bestimmte Zeitdauer DT fortgesetzt werden, bevor die Wischhäufigkeit auf die zweite Wischhäufigkeit WH2 reduziert wird. Dies dient ebenfalls wie die oben angegebene Integration der Lastgröße zur Ermittlung des Umschaltsignals dazu, dass kurzzeitig auftretende Lasterhöhungen nicht unmittelbar zu einer Reduzierung der Wischhäufigkeit führen.

Bei einer kontinuierlichen Reduzierung der Wischhäufigkeit auf die zweite Wischhäufigkeit WH2 kann die Abnahme der Reduzierung durch einen geeigneten Parameter in der Steuereinheit 6 eingestellt werden. Selbstverständlich kann das Profil des Verlaufs der Reduzierung auf die zweite Wischhäufigkeit WH2 auch gemäß mehrerer Parameter definiert werden.

Bei Unterschreiten der ersten Lastschwelle bzw. bei Unterschreiten einer von der ersten Lastschwelle WH1 verschiedenen zweiten Lastschwelle LS2 zu einem Zeitpunkt T2 kann das Wischen wieder mit der ursprünglichen ersten Wischhäufigkeit WH1 fortgesetzt werden. Das Einnehmen der ersten Wischhäufigkeit WH1 kann unmittelbar oder gemäß eines durch Parameter bestimmbaren kontinuierlichen Anstiegs der Wischhäufigkeit erfolgen. Vorzugsweise ist die Steilheit des Anstiegs der Wischhäufigkeit jedoch größer als die Steilheit der Abnahme der Reduzierung der Wischfrequenz, da eine Reduzierung des Lastmoments durch einen plötzlich auftretenden Regen hervorgerufen werden kann, so dass es notwendig ist, die Wischhäufigkeit möglichst schnell an die vorliegende Regensituation anzupassen, um für den Fahrer eine ausreichende Sicht zu gewährleisten.

Die Wischhäufigkeit kann gemäß einem vorgegebenem Schema dadurch erhöht werden, dass zunächst Wischintervalle reduziert werden und anschließend, nachdem die Wischintervalle auf Null reduziert worden sind, die Wischgeschwindigkeit entsprechend weiter erhöht wird. Entsprechend kann die Wischhäufigkeit reduziert werden, indem die Wischgeschwindigkeit bis zu einem Minimalwert reduziert wird und anschließend Wischintervalle zwischen die Wischzyklen vorgesehen werden. Jedoch ist es auch möglich, das Vorsehen von Wischintervallen und die Einstellung der Wischgeschwindigkeit gemäß einem anderen Schema bzw. unabhängig voneinander einzustellen. Z.B. kann zur Reduzierung der Wischhäufigkeit auf die zweite Wischhäufigkeit nur die Länge der Wischintervalle ohne Veränderung der Wischgeschwindigkeit erhöht werden oder umgekehrt nur die Wischgeschwindigkeit ohne Veränderung der Wischintervalle reduziert werden. Dies gilt analog für die Erhöhung der Wischhäufigkeit auf die erste Wischhäufigkeit.

Um dem Fahrer eine permanente Kontrolle über die Wischhäufigkeit der Wischeranlage zu geben, ist vorgesehen, dass durch eine Änderung einer Schaltstellung eines Lenkstockhebels 9 die Reduzierung der Wischhäufigkeit aufgrund einer erhöhten Last abgeschaltet werden kann, sodass die oben beschriebene Funktionalität durch den Fahrer jederzeit übersteuerbar ist. Dies kann durch ein permanentes Abschalten der Reduzierfunktion sowie ein zeitlich begrenztes Abschalten der Reduzierfunktion erfolgen, wobei bei anhaltend erhöhter Last eine Reduzierung der Wischhäufigkeit nach einer bestimmten Zeit nach Betätigen des Lenkstockhebels 9 gemäß oben beschriebener Funktionalität vorgenommen wird.

Obwohl durch die Funktion der Reduzierung der Wischhäufigkeit bei Vorliegen einer erhöhten Last einer schnellen Erwärmung der Antriebseinheit 2 vorgebeugt wird, kann es dennoch vorkommen, dass die Temperatur der Antriebseinheit 2 bei der zweiten Wischhäufigkeit WH2 über eine kritische Temperatur ansteigt, z.B. wenn die Last auf die Antriebseinheit weiterhin hoch bleibt. Dies kann jedoch durch ein Überwachen der Spannungen und Ströme in der Antriebseinheit detektiert werden, und es kann somit weiterhin eine Funktion der Notabschaltung der Antriebseinheit 2 der Wischeranlage vorgesehen sein.

Die erste LS1 und die zweite Lastschwelle LS2 können auf einen gleichen Wert oder auf verschiedene Werte eingestellt sein. Vorzugsweise ist die zweite Lastschwelle LS1, LS2 geringer als die erste Lastschwelle LS1, so dass eine Schalt-Hysterese gebildet wird, um ein schnelles Hin- und Herschalten zwischen Normalbetrieb und Reduzier-Betrieb zu vermeiden.

## Patentansprüche

1. Vorrichtung zum Ansteuern einer Wischanlage mit einer Antriebseinheit (2) zum Antreiben von mindestens einem Wischarm (4) und
mit einer Steuereinheit (6),
wobei die Steuereinheit (6) ausgebildet ist, um eine Wischhäufigkeit des Wischerarms abhängig von einer von dem durch die Antriebseinheit (2) bei einem Wischen aufzubringendem Drehmoment abhängigen Lastgröße einzustellen, wobei die Steuereinheit (6) die Wischhäufigkeit des Wischarms (4) von einer ersten Wischhäufigkeit (WH1) auf eine zweite reduzierte Wischhäufigkeit (WH2) reduziert, wenn die Lastgröße eine Lastschwelle übersteigt,
**dadurch gekennzeichnet, dass** die Steuereinheit (6) ausgebildet ist, das Reduzieren der Wischhäufigkeit des Wischarms (4) auf die zweite Wischhäufigkeit (WH2) gemäß einer kontinuierlichen Abnahme der Wischhäufigkeit durchzuführen.

2. Vorrichtung nach Anspruch 1, **dadurch gekennzeichnet, dass** eine Treibereinheit (3) zum Ansteuern der Antriebseinheit (2) und zum Einstellen einer Wischhäufigkeit gemäß einer Stellgröße vorgesehen ist.

3. Vorrichtung nach Anspruch 2, **dadurch gekennzeichnet, dass** ein Lastgrößendetektor (7) vorgesehen ist, um abhängig von dem durch die Antriebseinheit (2) aufzubringendem Drehmoment die Lastgröße bereitzustellen.

4. Vorrichtung nach Anspruch 3, **dadurch gekennzeichnet, dass** der Lastgrößendetektor (7) vorgesehen ist, um die Lastgröβe abhängig von mindestens eine der in der Antriebseinheit (2) vorliegenden Größen Antriebsspannung, Antriebsstrom und Drehzahl zu bestimmen.

5. Vorrichtung nach Anspruch 1, **dadurch gekennzeichnet, dass** die Steuereinheit (6) die Wischhäufigkeit des Wischarms (4) nach dem Überschreiten der Lastschwelle durch die Lastgröße nach einer vorgegebenen Zeitdauer (DT) oder nach einer vorgegebenen Anzahl von Wischzyklen reduziert.

6. Vorrichtung nach einem der Ansprüche 1 bis 5, **dadurch gekennzeichnet, dass** die Steuereinheit (6) ausgebildet ist, um die erste Wischhäufigkeit (WH1) des Wischarms (4) nach dem Unterschreiten einer zweiten Lastschwelle (LS2) unmittelbar oder gemäß einem vorgegebenen kontinuierlichen Anstieg einzustellen.

7. Vorrichtung nach einem der Ansprüche 1 bis 3, **dadurch gekennzeichnet, dass** ein manuell bedienbarer Schalter (9) vorgesehen ist, um die Wischhäufigkeit unabhängig von der eingestellten Wischhäufigkeit auf eine vorgegebene Wischhäufigkeit einzustellen.

8. Verfahren zum Ansteuern einer Wischanlage,
**dadurch gekennzeichnet, dass** eine Wischhäufigkeit beim Betrieb eines Wischerarms (4) abhängig von einem zum Wischen mit dem Wischerarm (4) aufzubringendem Drehmoment eingestellt wird, wobei die Steuereinheit (6) eine Wischhäufigkeit des Wischarms (4) von einer ersten Wischhäufigkeit (WH1) auf eine zweite reduzierte Wischhäufigkeit (WH2) reduziert, wenn die Lastgröße eine Lastschwelle übersteigt, **dadurch gekennzeichnet, dass** das Reduzieren der Wischhäufigkeit des Wischarms (4) auf die zweite Wischhäufigkeit (WH2) gemäß einer kontinuierlichen Abnahme der Wischhäufigkeit durchgeführt wird.

## Claims

1. Device for actuating a wiper system,
with a drive unit (2) for driving at least one wiper arm (4), and
with a control unit (6),
wherein the control unit (6) is designed in order to set a wiping frequency of the wiper arm depending on a load variable which is dependent on the torque to be applied by the drive unit (2) during wiping,
wherein the control unit (6) reduces the wiping frequency of the wiper arm (4) from a first wiping frequency (WH1) to a second reduced wiping frequency (WH2) when the load variable exceeds a load threshold, **characterized in that** the control unit (6) is designed to carry out the reduction of the wiping frequency of the wiper arm (4) to the second wiping frequency (WH2) in accordance with a continuous decrease in the wiping frequency.

2. Device according to Claim 1, **characterized in that** a driver unit (3) for actuating the drive unit (2) and for setting a wiping frequency in accordance with an actuating variable is provided.

3. Device according to Claim 2, **characterized in that** a load variable detector (7) is provided in order to supply the load variable depending on the torque to be applied by the drive unit (2).

4. Device according to Claim 3, **characterized in that** the load variable detector (7) is provided in order to determine the load variable depending on at least one of the variables - driving voltage, driving current and rotational speed - present in the drive unit (2).

5. Device according to Claim 1, **characterized in that** the control unit (6) reduces the wiping frequency of the wiper arm (4) after a predetermined period of time (DT) or after a predetermined number of wiping cycles following exceeding of the load threshold by the load variable.

6. Device according to one of Claims 1 to 5, **characterized in that** the control unit (6) is designed in order to set the first wiping frequency (WH1) of the wiper arm (4) directly after a second load threshold (LS2) is fallen short of or in accordance with a predetermined continuous rise.

7. Device according to one of Claims 1 to 3, **characterized in that** a manually operable switch (9) is provided in order to set the wiping frequency to a predetermined wiping frequency independently of the wiping frequency set.

8. Method for actuating a wiper system, wherein a wiping frequency is set during operation of a wiper arm (4) depending on a torque to be applied to the wiper arm (4) for wiping purposes, wherein the control unit (6) reduces a wiping frequency of the wiper arm (4) from a first wiping frequency (WH1) to a second reduced wiping frequency (WH2) when the load variable exceeds a load threshold, **characterized in that** the reduction of the wiping frequency of the wiper arm (4) to the second wiping frequency (WH2) is carried out in accordance with a continual decrease in the wiping frequency.

## Revendications

1. Dispositif de commande d'une installation d'essuie-glace comprenant une unité d'entraînement (2) pour l'entraînement d'au moins un bras d'essuie-glace (4) et comprenant une unité de commande (6), l'unité de commande (6) étant réalisée pour ajuster une fréquence de balayage du bras d'essuie-glace en fonction d'une grandeur de charge dépendant du couple à appliquer lors d'un balayage par l'unité d'entraînement (2), l'unité de commande (6) réduisant la fréquence de balayage du bras d'essuie-glace (4) d'une première fréquence de balayage (WH1) à une deuxième fréquence de balayage réduite (WH2) lorsque la grandeur de charge dépasse un seuil de charge, **caractérisé en ce que**
l'unité de commande (6) est réalisée pour effectuer la réduction de la fréquence de balayage du bras d'essuie-glace (4) à la deuxième fréquence de balayage (WH2) conformément à une diminution continue de la fréquence de balayage.

2. Dispositif selon la revendication 1, **caractérisé en ce qu'**il est prévu une unité d'actionnement (3) pour commander l'unité d'entraînement (2) et pour ajuster une fréquence de balayage en fonction d'une grandeur de réglage.

3. Dispositif selon la revendication 2, **caractérisé en ce qu'**il est prévu un détecteur de grandeur de charge (7) pour fournir la grandeur de charge en fonction du couple à appliquer par l'unité d'entraînement (2).

4. Dispositif selon la revendication 3, **caractérisé en ce que** le détecteur de grandeur de charge (7) est prévu pour déterminer la grandeur de charge en fonction d'au moins l'une des grandeurs stockées dans l'unité d'entraînement (2) : tension d'entraînement, courant d'entraînement et vitesse de rotation.

5. Dispositif selon la revendication 1, **caractérisé en ce que** l'unité de commande (6) réduit la fréquence de balayage du bras d'essuie-glace (4) après le dépassement du seuil de charge par la grandeur de charge après une durée prédéfinie (DT) ou après un nombre prédéfini de cycles de balayage.

6. Dispositif selon l'une quelconque des revendications 1 à 5, **caractérisé en ce que** l'unité de commande (6) est réalisée pour ajuster la première fréquence de balayage (WH1) du bras d'essuie-glace (4) après le dépassement par le bas d'un deuxième seuil de charge (LS2) directement ou en fonction d'une augmentation continue prédéterminée.

7. Dispositif selon l'une quelconque des revendications 1 à 3, **caractérisé en ce qu'**un commutateur à commande manuelle (9) est prévu, afin d'ajuster la fréquence de balayage à une fréquence de balayage prédéfinie indépendamment de la fréquence de balayage ajustée.

8. Procédé de commande d'une installation d'essuie-glace,
une fréquence de balayage étant ajustée lors du fonctionnement d'un bras d'essuie-glace (4) en fonction d'un couple à appliquer pour balayer avec le bras d'essuie-glace (4), l'unité de commande (6) réduisant une fréquence de balayage du bras d'essuie-glace (4) d'une première fréquence de balayage (WH1) à une deuxième fréquence de balayage réduite (WH2) lorsque la grandeur de balayage dépasse un seuil de charge, **caractérisé en ce que** la réduction de la fréquence de balayage du bras d'essuie-glace (4) à la deuxième fréquence de balayage (WH2) est effectuée conformément à une diminution continue de la fréquence de balayage.
